# EUROPÄISCHE PATENTSCHRIFT

(11) **EP 0 807 937 B1**
(45) Veröffentlichungstag und Bekanntmachung des Hinweises auf die Patenterteilung: **06.10.2010**
(21) Anmeldenummer: 97107948.8
(22) Anmeldetag: 15.05.1997
(51) Int. Cl.: G21C 13/00, G21F 3/04

(54) **Betriebsgebäude einer kerntechnischen Anlage mit Innenraumverkleidung**
Nuclear utility building comprising an interior lined room
Enceinte de service d'une installation nucléaire comprenant une chambre revêtue

(30) Priorität: 15.05.1996 DE 19619723
(43) Veröffentlichungstag der Anmeldung: 19.11.1997
(73) Patentinhaber: AREVA NP GmbH, 91052 Erlangen (DE)
(72) Erfinder: Werschnik, Werner, Dipl.-Ing., 65428 Rüsselsheim (DE); Gliha, Viktor, 63456 Hanau (DE)
(74) Vertreter: Tergau & Pohl Patentanwälte

(56) Entgegenhaltungen:
- EP-A- 0 257 016
- WO-A-93/20561
- CH-A- 543 161
- PATENT ABSTRACTS OF JAPAN vol. 013, no. 242 (P-880), 7.Juni 1989 & JP 01 044896 A (TOKUJI OSHIO), 17.Februar 1989,

## Beschreibung

Die Erfindung betrifft ein Verfahren zum Errichten einer mit einer Verkleidung zum Strahlenschutz versehenen Innenwand eines Betriebsgebäudes einer kerntechnischen Anlage.

In einer kerntechnischen Anlage fällt eine Vielzahl von Arbeitsvorgängen an, in denen jeweils radioaktives Material zu handhaben ist. Dabei kann es sich beispielsweise um die Behandlung von Brennelementen oder auch um eine Lagerung radioaktiver Stoffe handeln. Diese Handhabung findet üblicherweise in einem entsprechenden Betriebsgebäude der kerntechnischen Anlage statt.

Aus Strahlenschutzgründen ist es erforderlich, dass ein zur Handhabung radioaktiver Stoffe vorgesehener Innenraum eines derartigen Betriebsgebäudes aufgrund seiner baulichen Ausgestaltung eine hinreichende Abschirmung radioaktiver Strahlung gegenüber der Außenwelt aufweist. Dazu ist es üblich, die Innenwände eines derartigen Innenraumes in Schwerbeton mit einer hohen Wandstärke von beispielsweise etwa 0,6 m auszuführen. Bei einer derartigen Bauweise ist jedoch der verbleibende Innenraum in einem Betriebsgebäude mit vorgegebenen äußeren Dimensionen besonders gering. Zudem ist eine derartige bauliche Ausführung mit hohen Baukosten und einer langen Bauzeit verbunden.

Zusätzlich oder alternativ kann zum Zwecke des Strahlenschutzes auch eine Innenverkleidung einer Betonwand vorgesehen sein, insbesondere unter Verwendung von Metallplatten. Zur Befestigung der Metallplatten können in die Betonwand eingegossene Betonanker vorgesehen sein.

Das Dokument CH 543 161 A zeigt in Fig. 1 ein zur Strahlenschutzauskleidung einer Betonwand verwendbares Bauelement mit einer nach Art einer Sandwichbauweise zwischen zwei Tragschichten angeordneten Schwermetallplatte. Die Befestigung an der Wand geschieht mit Hilfe von miteinander verschraubten U-förmigen Rahmen. Dabei braucht das Bauelement selber nicht durchbohrt oder in sonstiger Weise nachbearbeitet zu werden.

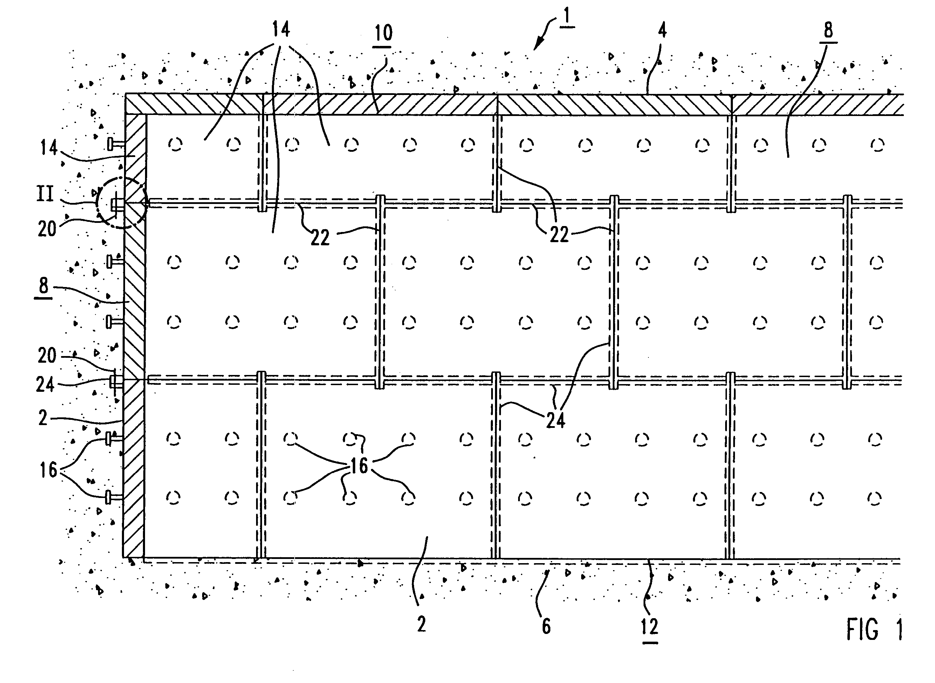

Das Dokument JP 02 167 499 A zeigt in Fig. 1 einen Vorratsraum einer kerntechnischen Anlage, dessen Wände an der Innenseite mit einer Verkleidung aus Metallplatten versehen sind. Die Metalplatten sind mit Ankerelementen verschweißt, die in die Wände eingelassen sind (vgl. Fig. 4 sowie Abstract).

Das Dokument JP 02 269 999 A zeigt einen in ähnlicher Weise ausgestalteten Raum zur Aufnahme radioaktiver Abfälle.

Der Erfindung liegt die Aufgabe zugrunde, ein Verfahren anzugeben, mit dem eine Betonwand eines Betriebsgebäudes einer kerntechnischen Anlage mitsamt einer aus Metallplatten gebildeten Strahlenschutzverkleidung mit besonders geringem Aufwand und in kurzer Bauzeit errichtet werden kann.

Diese Aufgabe wird erfindungsgemäß gelöst durch die Verfahrensschritte gemäß Anspruch 1.

Die Erfindung geht dabei von der Überlegung aus, dass ein mit geringem Aufwand und in besonders kurzer Bauzeit errichtbares Betriebsgebäude Innenwände in konventioneller Bauweise, also mit konventioneller Wandstärke, ausweisen soll. Um auch bei dieser Bauweise den erforderlichen Strahlenschutz sicherzustellen, sollten diese Innenwände geeignet modifiziert werden. Die Modifizierung sollte dabei derart gewählt werden, dass für eine Bauzeit ein besonders hoher Vorfertigungsgrad erreichbar ist.

In vorteilhafter Weiterbildung weist der Innenraum auch an seiner Decke eine derartige Verkleidung zum Strahlenschutz auf.

Für eine besonders einfache Montage bei gleichzeitiger hoher Abschirmwirkung umfasst die Verkleidung eine Anzahl von Metallplatten, von denen jede mittels einer Anzahl von Betonankern an einer Innenwand befestigt ist. Da die Abschirmwirkung einer derartigen Metallplatte mit dem spezifischen Gewicht des Metalls zunimmt, sollte die Metallplatte ein Metall mit hoher Dichte enthalten, wie beispielsweise Blei oder Stahl. Durch die Anbringung der Metallplatten mittels der Betonanker an der jeweiligen Innenwand ist zudem eine besonders hohe Baufestigkeit erreicht.

Um auch an einer von jeweils zwei Metallplatten gebildeten Fuge eine besonders hohe Abschirmwirkung zu gewährleisten, ist die Fuge vorteilhafterweise durch ein Fugenblech überdeckt. Jedes Fugenblech wird dabei bei der Montage auf der dem Beton der Innenwand zugewandten Seite der Metallplatte eingeschoben und fixiert.

Für eine besonders hohe bauliche Stabilität und zum Zweck der Montage sind jeweils zwei Metallplatten über eine Schraubverbindung miteinander verbunden.

Die mit der Erfindung erzielten Vorteile bestehen insbesondere darin, dass durch die Kombination einer in konventioneller Bauweise ausgeführten Beton-Innenwand mit einer Verkleidung zum Strahlenschutz, insbesondere aus einer Anzahl von Metallplatten, mit geringem Aufwand eine geringe Bauzeit zur Errichtung des Betriebsgebäudes erreichbar ist. In statischer Hinsicht ist zudem für eine derartige Bauweise im Gegensatz zur herkömmlichen Bauweise in Schwerbeton keine Sonderzulassung erforderlich. Zudem ist auch ein bereits bestehender Innenraum eines Betriebsgebäudes mit einer geeigneten Verkleidung in einen strahlengeschützten Raum umrüstbar.

Ein Ausführungsbeispiel der Erfindung wird anhand einer Zeichnung näher erläutert. Darin zeigen:
- Figur 1: einen Innenraum eines Betriebsgebäudes einer kern- technischen Anlage mit Metallplatten zum Strahlen- schutz und
- Figur 2: im Querschnitt eine Verbindungsstelle zwischen zwei Metallplatten.

Gleiche Teile sind in beiden Figuren mit den gleichen Bezugszeichen versehen.

Der Innenraum 1, der in Figur 1 anhand einer seiner Innenwände 2 in Aufsicht und anhand einer seiner Innenwände 2, seiner Raumdecke 4 und seines Bodens 6 im Querschnitt dargestellt ist, ist Teil eines Betriebsgebäudes einer kerntechnischen Anlage. Im Ausführungsbeispiel handelt es sich bei dem Betriebsgebäude um ein Zwischenlager für schwach radioaktive Abfälle, die vor einer Endlagerung einer Zwischenbehandlung zuzuführen sind. Alternativ kann es sich beim Betriebsgebäude aber auch um jedes andere Betriebsgebäude einer kerntechnischen Anlage handeln, wie beispielsweise um eine Abfallbehandlungsanlage oder um eine Anlage zur Brennelementeherstellung.

Jede Innenwand 2 des Innneraums 1 weist eine Verkleidung 8 zum Strahlenschutz auf. Darüber hinaus ist auch die Decke 4 des Innenraums 1 mit einer Verkleidung 10 zum Strahlenschutz ausgerüstet. Der Fußboden 6 des Innenraums 1 weist an seiner Oberfläche einen dekontaminierenden Anstrich 12 auf.

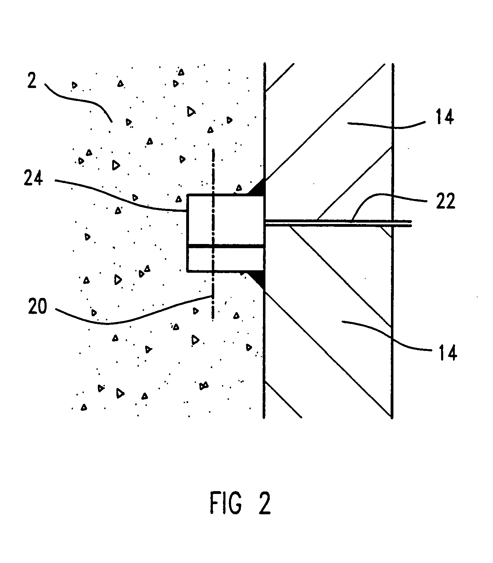

Die Verkleidung 8 jeder Innenwand 2 umfaßt eine Anzahl von Metallplatten 14, von denen jede mittels einer Anzahl von Betonankern 16 an der jeweiligen Innenwand 2 befestigt ist. Um eine hohe Abschirmwirkung gegenüber radioaktiver Strahlung zu erzielen, bestehen die Metallplatten 14 aus einem Metall hoher Dichte. Im Ausführungsbeispiel ist als Metall aus fertigungstechnischen Gründen Stahl gewählt, es kann jedoch auch ein beliebiges anderes Material mit hoher Dichte wie beispielsweise Blei sein. Jeweils zwei benachbarte Metallplatten 14 sind über eine Schraubverbindung 20 miteinander verbunden (Figur 2). Die Schraubverbindung 20 ist dabei an der dem Beton der jeweiligen Innenwand 2 zugewandten Seite der Metallplatten 14 angeordnet.

Zur Abdichtung der Fugen 22 zwischen jeweils zwei Metallplatten 14 ist für jede Fuge 22 ein Fugenblech 24 vorgesehen, das die jeweilige Fuge 22 überdeckt. Die Fugenbleche 24 sind dabei ebenfalls auf der dem Beton der jeweiligen Innenwand 2 zugewandten Seite der jeweiligen Metallplatten 14 angeordnet.

Zur Errichtung einer derartigen verkleideten Innenwand 2 des Innenraums 1 werden zunächst die Metallplatten 14 über die jeweiligen Schraubverbindungen 20 miteinander verbunden, so daß die vollständige Verkleidung 8 für die jeweilige Innenwand 2 entsteht. Auf diese Weise ist die Verkleidung 8 auch vorfertigbar. Sodann wird die Verkleidung 8 in ihrer endgültigen Lage positioniert, wobei die untersten Metallplatten 14 das Gewicht der Verkleidung 8 tragen. Nach der Errichtung der Verkleidung 8 wird die Innenwand 2 aus Beton gegossen, wobei die Verkleidung 8 als Schalung dient. Beim Gießen des Betons der Innenwand 2 umschließt dieser die an den Metallplatten 14 angeordneten Betonanker 16 derart, daß diese dauerhaft fixiert sind. Somit entsteht eine dauerhafte Kombination oder Verbindung der Verkleidung 8 mit der Innenwand 2.

Aufgrund der Kombination der Verkleidung 8 mit der Innenwand 2 kann die Innenwand 2 bei hohem Abschirmungseffekt in konventioneller Wandstärke von etwa 0,4 m und somit besonders raumsparend ausgeführt sein. Im Gegensatz zu herkömmlichen Innenwänden eines derartigen Innenraumes, die mit vergrößerter Wandstärke von etwa 0,6 m und in Schwerbeton ausgeführt sein müssen, ist für die Errichtung einer derartigen Innenwand 2 keine Sonderzulassung erforderlich. Aufgrund der einfachen Montierbarkeit der Verkleidung 8 ist zudem eine besonders kurze Bauzeit bei der Errichtung einer derartigen abschirmungswirksamen Innenwand 2 erreichbar. Der Aufbau der Verkleidung 8 aus miteinander verschraubbaren Metallplatten 14 bedingt zudem eine hohe Flexibilität bei der Konzeption der Verkleidung 8. Daher ist eine derartige Verkleidung 8 auch in Kombination mit einer bereits existierenden Innenwand 2 in der Art einer Nachrüstung einsetzbar. In diesem Fall werden als Befestigungselemente beispielsweise Durchsteckanker oder Dübel verwendet.

## Patentansprüche

1. Verfahren zum Errichten einer mit einer Verkleidung (8, 10) zum Strahlenschutz versehenen Innenwand (2) eines Betriebsgebäudes einer kerntechnischen Anlage mit den Schritten:
eine Mehrzahl von in Ihrer Gesamtheit die Verkleidung (8, 10) bildenden Metallplatten (14), an denen jeweils ein Betonanker (16) angeordnet ist, wird über Schraubverbindungen (20) miteinander verbunden;
die vormontierte Verkleidung (8, 10) wird in ihrer endgültigen Lage positioniert;
die Innenwand (2) wird aus Beton gegossen, wobei die Verkleidung (8, 10) als Schalung dient, und wobei die Betonanker (16) zur Fixierung der Verkleidung (8, 10) in die Innenwand (2) eingegossen werden.

## Claims

1. A method for erecting an inside wall (2), provided with a facing (8, 10) for radiation protection, of an operation building of a nuclear power plant, comprising the following steps:
a plurality of metal plates (14), which in their totality form the facing (8, 10) and on each of which a concrete anchor (16) is arranged, are connected with each other via screw joints (20);
the pre-assembled facing (8, 10) is positioned in its final position;
the inside wall (2) is cast of concrete, the facing (8, 10) serving as formwork and the concrete anchors (16) being cast into the inside wall (2) for fixing the facing (8, 10).

## Revendications

1. Procédé pour ériger une paroi intérieure (2), munie d'un revêtement (8, 10) pour protection contre les rayonnements, d'un bâtiment de service d'une centrale nucléaire, comprenant les pas suivants:
une pluralité de plaques métalliques (14) qui, dans leur totalité, forment le revêtement (8, 10) et à chacune desquelles, un tirant en béton (16) est ménagé, sont reliées l'une avec l'autre au moyen de raccords vissés (20);
le revêtement (8, 10) préassemblé est positionné dans sa position finale;
la paroi intérieure (2) est coulée en béton, le revêtement (8, 10) servant de coffrage et les tirants en béton (16) étant coulés dans la paroi intérieure (2) pour fixer le revêtement (8, 10).
